# EUROPÄISCHE PATENTSCHRIFT

(11) **EP 3 665 502 B1**
(45) Veröffentlichungstag und Bekanntmachung des Hinweises auf die Patenterteilung: **15.09.2021**
(21) Anmeldenummer: 18750405.5
(22) Anmeldetag: 02.08.2018
(51) Int. Cl.: G01S 17/02, G01S 15/93, G01S 17/93, G01S 13/86, G01S 13/87, G01S 13/93, G01S 15/87

(54) **VERFAHREN ZUM ÜBERWACHEN EINES UMGEBUNGSBEREICHES EINES KRAFTFAHRZEUGS, SENSORSTEUERGERÄT, FAHRERASSISTENZSYSTEM SOWIE KRAFTFAHRZEUG**
METHOD FOR MONITORING SURROUNDINGS OF A MOTOR VEHICLE, SENSOR CONTROLLER, DRIVER ASSISTANCE SYSTEM, AND MOTOR VEHICLE
PROCÉDÉ DE SURVEILLANCE D'UNE ZONE ENVIRONNANTE D'UN VÉHICULE AUTOMOBILE, APPAREIL DE COMMANDE DE CAPTEURS, SYSTÈME D'AIDE À LA CONDUITE AINSI QUE VÉHICULE AUTOMOBILE

(30) Priorität: 09.08.2017 DE 102017118156
(43) Veröffentlichungstag der Anmeldung: 17.06.2020
(73) Patentinhaber: Valeo Schalter und Sensoren GmbH, 74321 Bietigheim-Bissingen (DE)
(72) Erfinder: BEUTH, Thorsten, 74321 Bietigheim-Bissingen (DE)
(74) Vertreter: Kluth, Philipp
(86) Internationale Anmeldenummer: PCT/EP2018/070936
(87) Internationale Veröffentlichungsnummer: WO 2019/030094

(56) Entgegenhaltungen:
- WO-A1-2016/020347
- DE-A1-102013 021 837
- DE-A1-102015 201 706
- US-B2- 6 664 918

## Beschreibung

Die Erfindung betrifft ein Verfahren zum Überwachen eines Umgebungsbereiches eines Kraftfahrzeugs, wobei durch zumindest zwei Sensoreinrichtungen des Kraftfahrzeugs erfasste Messpunkte von Oberflächen von Objekten in dem Umgebungsbereich empfangen werden. Die Erfindung betrifft außerdem ein Sensorsteuergerät, ein Fahrerassistenzsystem sowie ein Kraftfahrzeug.

Es ist bereits aus dem Stand der Technik bekannt, einen Umgebungsbereich eines Kraftfahrzeugs mittels Sensoreinrichtungen bzw. Sensoren des Kraftfahrzeugs zu überwachen. Mittels solcher Sensoreinrichtungen können beispielsweise Objekte bzw. Gegenstände in dem Umgebungsbereich des Kraftfahrzeugs erkannt werden und deren räumliche Lagen relativ zum Kraftfahrzeug bestimmt werden. Dazu offenbart die EP 1 405 100 B1 ein Verfahren zur Bereitstellung korrigierter Daten zur Erzeugung eines Modells eines Überwachungsbereiches, der in jeweiligen Sichtbereichen von mindestens zwei optoelektronischen Sensoren, insbesondere Laserscannern, zur Bestimmung der Lage von erfassten Gegenständen enthalten ist. Basierend auf den korrigierten Daten kann auch eine Objekterkennung im Überschneidungsbereich der Sensoren für einen Gegenstand erfolgen. Für den gleichen Gegenstand können die korrigierte Daten aus den verschiedenen Perspektiven der Sensoren zusammengeführt werden, wodurch Komplikationen durch das Zusammenführen von sich nur teilweise überschneidenden Objekten vermieden werden, die zu demselben Gegenstand gehören.

Die DE 10 2013 021837 A1 offenbart ein Verfahren zum Klassifizieren eines in einem Umgebungsbereich eines Kraftfahrzeugs befindlichen Objekts mittels einer Sensoreinrichtung des Kraftfahrzeugs, wobei von zumindest zwei voneinander unterschiedlichen Sensorpositionen aus jeweilige Entfernungswerte zu dem zu klassifizierenden Objekt durch die Sensoreinrichtung erfasst werden und das Klassifizieren in Abhängigkeit von den zumindest zwei Entfernungswerten dahingehend erfolgt, dass bei dem Objekt zumindest zwischen einem punktförmigen Objekt und einem ausgedehnten Objekt unterschieden wird.

Die DE 10 2015 201706 A1 offenbart ein Verfahren zum Bereitstellen einer Umfeldkarte für ein Fahrzeug, wobei die Umfeldkarte Zellen umfasst, die jeweils Abschnitten des Umfeldes des Fahrzeugs zugeordnet sind und denen jeweils eine Hinderniswahrscheinlichkeit zugewiesen ist, die die Wahrscheinlichkeit repräsentiert, dass der entsprechende Abschnitt des Umfeldes mit einem Hindernis belegt ist.

Die US 6 664 918 B2 offenbart ein Verfahren und eine Vorrichtung zur Bestimmung der Form und der Position eines Objektes mittels Trilateration auf Basis von Messergebnissen einer Vielzahl an Abstandssensoren. Die WO 2016/020347 A1 offenbart ein Verfahren zum Erkennen eines Objekts in einem Umgebungsbereich eines Kraftfahrzeugs mittels eines Ultraschallsensors.

Problematisch ist es jedoch, wenn sich die Sichtbereiche bzw. Erfassungsbereiche der Sensoreinrichtungen nicht überschneiden, sodass die Sensoreinrichtungen in diesen überschneidungsfreien Bereichen in dem Umgebungsbereich "blind" sind. Befindet sich nun ein Objekt sowohl in den Sichtbereichen der Sensoreinrichtungen als auch in dem blinden, überschneidungsfreien Bereich, so kann es vorkommen, dass das Objekt fälschlicherweise als zwei separate Objekte erkannt bzw. charakterisiert wird. Dies kann dann problematisch werden, wenn der Bereich zwischen den zwei fälschlicherweise als separat charakterisierten Objekten groß genug für das Kraftfahrzeug ist und somit als für das Kraftfahrzeug befahrbar bewertet wird.

Es ist Aufgabe der vorliegenden Erfindung, eine Lösung bereitzustellen, wie Objekte in einem Umgebungsbereich eines Kraftfahrzeugs zum Überwachen des Umgebungsbereiches zuverlässig erfasst werden können.

Diese Aufgabe wird erfindungsgemäß durch ein Verfahren, ein Sensorsteuergerät, ein Fahrerassistenzsystem sowie ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.

Gemäß einer Ausführungsform eines erfindungsgemäßen Verfahrens zum Überwachen eines Umgebungsbereiches eines Kraftfahrzeugs werden durch zumindest zwei Sensoreinrichtungen des Kraftfahrzeugs erfasste Messpunkte von Oberflächen von Objekten in dem Umgebungsbereich empfangen. Insbesondere werden durch eine erste Sensoreinrichtung erfasste erste Messpunkte eines ersten Oberflächenbereiches empfangen und durch eine zweite Sensoreinrichtung erfasste zweite Messpunkte eines mit dem ersten Oberflächenbereich überlappungsfreien zweiten Oberflächenbereiches empfangen. Anhand der ersten und zweiten Messpunkte kann eine relative Lage der Oberflächenbereiche zueinander bestimmt werden und anhand der relativen Lage kann bestimmt werden, ob die Oberflächenbereiche einem einzelnen Objekt zuzuordnen sind. Falls ja, werden die Oberflächenbereiche insbesondere zu einem Gesamtoberflächenbereich des Objektes zusammengelegt.

Gemäß einer besonders bevorzugten Ausführungsform eines erfindungsgemäßen Verfahrens zum Überwachen eines Umgebungsbereiches eines Kraftfahrzeugs werden durch zumindest zwei Sensoreinrichtungen des Kraftfahrzeugs erfasste Messpunkte von Oberflächen von Objekten in dem Umgebungsbereich empfangen. Darüber hinaus werden durch eine erste Sensoreinrichtung erfasste erste Messpunkte eines ersten Oberflächenbereiches empfangen und durch eine zweite Sensoreinrichtung erfasste zweite Messpunkte eines mit dem ersten Oberflächenbereich überlappungsfreien zweiten Oberflächenbereiches empfangen. Anhand der ersten und zweiten Messpunkte wird eine relative Lage der Oberflächenbereiche zueinander bestimmt und anhand der relativen Lage wird bestimmt, ob die Oberflächenbereiche einem einzelnen Objekt zuzuordnen sind. Falls ja, werden die Oberflächenbereiche zu einem Gesamtoberflächenbereich des Objektes zusammengelegt.

Mittels des Verfahrens können Objekte in dem Umgebungsbereich des Kraftfahrzeugs charakterisiert werden. Informationen über das charakterisierte Objekt können einem Steuergerät eines Fahrerassistenzsystems des Kraftfahrzeugs bereitgestellt werden, welches dazu ausgelegt ist, einen Fahrer des Kraftfahrzeugs beim Führen des Kraftfahrzeugs mittels Assistenzfunktionen zu unterstützen. Zum Bereitstellen einer Assistenzfunktion kann das Steuergerät beispielsweise dazu ausgelegt sein, das Kraftfahrzeug zumindest semi-autonom zu manövrieren und/oder Maßnahmen zum Vermeiden einer Kollision des Kraftfahrzeugs mit dem Objekt bereitzustellen. Eine solche kollisionsvermeidende Maßnahme kann beispielsweise die Ausgabe eines Warnsignals an einen Fahrer des Kraftfahrzeugs und/oder ein automatisches Abbremsen des Kraftfahrzeugs sein. Zum Charakterisieren von Objekten in dem Umgebungsbereich werden, beispielsweise von zumindest einem Sensorsteuergerät des Kraftfahrzeugs, Sensordaten der zumindest zwei Sensoreinrichtungen empfangen und Messpunkte in den Sensordaten erkannt bzw. identifiziert. Die Messpunkte werden dabei charakterisiert und somit bestimmt, ob die von verschiedenen Sensoreinrichtungen erfassten Messpunkte von einem einzelnen Objekt oder mehreren Objekten stammen.

Die Messpunkte werden insbesondere in empfangenen Sensordaten zumindest eines Lidar-Sensors und/oder zumindest einer Kamera und/oder zumindest eines Radarsensors und/oder zumindest eines Ultraschallsensors der Sensoreinrichtungen erfasst. Sichtfelder bzw. Erfassungsbereiche der Sensoreinrichtungen können sich dabei bereichsweise in einem Überschneidungsbereich bzw. Überlappungsbereich überlagern. Die zumindest zwei Sensoreinrichtungen können dabei gleichartig, d.h. nach dem gleichen Messprinzip arbeitende, Sensoreinrichtungen oder verschiedenartige, d.h. nach verschiedenen Messprinzipien arbeitende, Sensoreinrichtungen sein. Im Falle von Sensoreinrichtungen, welche Abstandssensoren, beispielsweise Lidar-Sensoren, Radarsensoren oder Ultraschallsensoren, aufweisen, entsprechen die Messpunkte Reflexionspunkten in einem von den Abstandssensoren ausgesendeten und an den Oberflächenbereichen der Objekte reflektierten Sensorsignals. Jedem Reflexionspunkt bzw. jedem Messpunkt kann dabei ein Lagewert, also ein Abstandswert sowie ein Orientierungswert, beispielsweise ein Winkel zu einer Referenzachse, zugeordnet werden, sodass anhand der Messpunkte die relative Lagen der Oberflächenbereiche und damit die relativen Lagen der Objekte zu dem Kraftfahrzeug erkannt werden können.

Die ersten und zweiten Messpunkte liegen dabei in sich nicht überlappenden Bereichen der Erfassungsbereiche der zumindest zwei Sensoreinrichtungen. Die ersten Messpunkte liegen also in einem ersten Erfassungsbereich der ersten Sensoreinrichtung und die zweiten Messpunkte liegen in einem zweiten Erfassungsbereich der zweiten Sensoreinrichtung. Die überlappungsfreien Bereiche können beispielsweise daraus resultieren, dass sich die Erfassungsbereiche der Sensoreinrichtungen im Allgemeinen nicht überlappen oder dass sich die Erfassungsbereiche der Sensoreinrichtungen in demjenigen Abstandsbereich, in welchem sich die Messpunkte bzw. die Oberflächenbereiche befinden, nicht überlappen. Um dennoch bewerten zu können, ob die Messpunkte und damit die Oberflächenbereiche zu demselben Objekt gehören, wird die relative Lage der Oberflächenbereiche anhand der ersten und zweiten Messpunkte erfasst. Anhand der relativen Lage kann dann bewertet werden, ob die Oberflächenbereiche zu demselben Objekt gehören und daher zu dem Gesamtoberflächenbereich zusammengelegt werden können oder ob die Oberflächenbereiche zu zwei separaten Objekten gehören und daher nicht zusammengelegt werden können.

Aus dem Verfahren ergibt sich zum einen der Vorteil, dass Oberflächenbereiche, welche sich in zumindest teilweise überschneidungsfreien Erfassungsbereichen befinden, nicht fälschlicherweise zwei separaten Objekten zugeordnet werden. So kann verhindert werden, dass der Bereich zwischen den zwei separaten Objekten, welcher eigentlich durch einen weiteren Oberflächenbereich des einzelnen Objektes belegt ist, fälschlicherweise als eine für das Kraftfahrzeug befahrbare Fläche bewertet wird. Zum anderen ergibt sich der Vorteil, dass durch das Zusammenlegen bzw. Zusammenfügen von Oberflächenbereichen, welche zum selben Objekt gehören, eine Datenmenge beim Hinterlegen der Objektinformationen reduziert werden kann.

Vorzugsweise wird als die relative Lage der Oberflächenbereiche zueinander ein Abstand von zwei direkt benachbarten ersten und zweiten Messpunkten bestimmt und anhand des Abstands wird bestimmt, ob die Oberflächenbereiche einem einzelnen Objekt zuzuordnen sind. Zum Charakterisieren der Messpunkte und damit der Oberflächenbereiche wird also der Abstand der direkt benachbarten ersten und zweiten Messpunkte bestimmt. Die Erfassungsbereiche weisen dabei jeweils eine innere Begrenzung und eine äußere Begrenzung auf, wobei die inneren Begrenzungen der Erfassungsbereiche zueinander benachbart sind. Die direkt benachbarten Messpunkte sind dabei diejenigen ersten und zweiten Messpunkte, welche den geringsten Abstand zu den inneren Begrenzungen der jeweiligen Erfassungsbereiche aufweisen. Als die direkt benachbarten ersten und zweiten Messpunkte werden dabei diejenigen zwei Messpunkte erfasst, welche den kleinsten Abstand zueinander aufweisen. Der zwischen diesen direkt benachbarten Messpunkten liegende Bereich kann nun entweder ein objektfreier Bereich zwischen zwei separaten Objekten sein oder ein die zwei Oberflächenbereiche verbindender dritter Oberflächenbereich desselben Objektes sein. Anhand des Abstands zwischen den zwei direkt benachbarten Messpunkten kann der zwischen diesen Messpunkten liegende Bereich charakterisiert werden. Somit kann auf besonders einfache Weise bewertet werden, ob anhand von Messpunkten erfasste Oberflächenbereiche demselben Objekt oder separaten Objekten in dem Umgebungsbereich des Kraftfahrzeugs zuzuordnen sind.

Dabei kann vorgesehen sein, dass anhand der ersten Messpunkte eine erste Konturlinie bestimmt wird, anhand der zweiten Messpunkte eine zweite Konturlinie bestimmt wird und die erste Konturlinie und die zweite Konturlinie in Abhängigkeit von dem Abstand der beiden benachbarten ersten und zweiten Messpunkte, welche einander zugewandten Endpunkten der Konturlinien entsprechen, zu einer den Gesamtoberflächenbereich repräsentierenden Gesamtkonturlinie verbunden werden. Die jeweiligen Konturlinien repräsentieren dabei einen Verlauf der Oberflächenbereiche relativ zum Kraftfahrzeug. Beispielsweise können die beiden Konturlinien mittels Ausgleichsrechnung anhand der jeweiligen Messpunkte bestimmt werden. Die zugewandten Endpunkte der Konturlinien entsprechen dabei den benachbarten ersten und zweiten Messpunkten in den jeweiligen Erfassungsbereichen. Wenn anhand des Abstandes der Endpunkte der Konturlinien erfasst wurde, dass die Oberflächenbereiche demselben Objekt zuzuordnen sind, so können die Endpunkte miteinander verbunden werden, sodass sich die Gesamtkonturlinie ergibt. Diese Gesamtkonturlinie repräsentiert dann den Gesamtoberflächenbereich des einzelnen Objektes. Anhand der Gesamtkonturlinie können dann die Lage des Gesamtoberflächenbereiches und damit die Lage des Objekts relativ zum Kraftfahrzeug besonders einfach bestimmt werden. Wenn anhand des Abstandes der Endpunkte der Konturlinien erfasst wurde, dass die Oberflächenbereiche nicht demselben Objekt zuzuordnen sind, so können anhand der unverbundenen Konturlinien die Lagen der Oberflächenbereiche und damit die Lagen der separaten Objekte relativ zum Kraftfahrzeug bestimmt werden.

In einer Ausführungsform der Erfindung werden der erste und der zweite Oberflächenbereich einem einzelnen Objekt zugeordnet und zu dem Gesamtoberflächenbereich zusammengelegt, falls der Abstand einen vorbestimmten Schwellwert unterschreitet. Der Schwellwert kann dabei beispielsweise einen Wert aufweisen, welcher zumindest einer Breite des Kraftfahrzeugs entspricht. Wenn der Abstand kleiner als der Schwellwert, also kleiner als die Breite des Kraftfahrzeugs, ist, werden die Oberflächenbereiche zu dem Gesamtoberflächenbereich zusammengelegt. Der daraus resultierende Gesamtoberflächenbereich wird also als der Oberflächenbereich eines Objektes bewertet, welcher ein Hindernis für das Kraftfahrzeug darstellt. Andernfalls werden die Oberflächenbereiche zwei separaten Objekten zugeordnet. Aus dem Vergleich des Abstands zwischen den beiden direkt benachbarten ersten und zweiten Messpunkten bzw. den Endpunkten der beiden Konturlinien mit dem Schwellwert ergibt sich zum einen der Vorteil, dass die Bewertung, wie vielen Objekten die Oberflächenbereiche zuzuordnen sind, auf besonders einfache und schnelle Weise erfolgen kann. Zum anderen ergibt sich im Falle, dass die Oberflächenbereiche in der Realität tatsächlich zwei Objekten zuzuordnen sind und daher fälschlicherweise zusammengelegt wurden, kein Nachteil, da der Bereich zwischen den zwei Oberflächenbereichen ohnehin nicht für das Kraftfahrzeug passierbar ist.

Alternativ oder zusätzlich werden der erste und der zweite Oberflächenbereich einem einzelnen Objekt zugeordnet und zu dem Gesamtoberflächenbereich zusammengelegt, falls Werte des Abstands in zumindest zwei Messungen der Sensoreinrichtungen höchstens um einen vorbestimmten Grenzwert voneinander abweichen. Gemäß dieser Ausführungsform der Erfindung werden mehrere Messungen durchgeführt und die Abstandswerte ir den mehreren Messungen bestimmt. Falls die Werte des Abstands höchstens um den vorbestimmten Grenzwert voneinander abweichen, kann davon ausgegangen werden, dass die Oberflächenbereiche einem einzelnen Objekt zuzuordnen sind. Der Grenzwert ist insbesondere so gewählt, dass bei Unterschreitung dieses Grenzwertes davon ausgegangen werden kann, dass der Abstand zwischen zwei Messungen im Wesentlichen konstant ist. Dieser Ausführungsform liegt die Erkenntnis zugrunde, dass sich eine Perspektive der Sensoreinrichtungen zwischen zwei Messungen durch die Bewegung des Kraftfahrzeugs verändert. Falls es sich bei den Oberflächenbereichen um die Oberflächenbereiche separater Objekte handelt, so verändern sich die Werte des Abstands während der Messungen. Wenn es sich bei den Oberflächenbereichen um die Oberflächenbereiche eines einzelnen Objektes handelt, so verändern sich die Werte des Abstands zwischen den Messungen im Wesentlichen nicht. Durch das mehrmalige Bestimmen der Abstandswerte in zumindest zwei Messungen kann auf besonders zuverlässige Weise überprüft werden, ob es sich bei den Oberflächenbereichen um die Oberflächenbereiche verschiedener Objekte handelt oder nicht.

Besonders bevorzugt wird die Zuordnung der Oberflächenbereiche von zumindest einem dezentralen Sensorsteuergerät des Kraftfahrzeugs durchgeführt und zumindest eine durch das zumindest eine dezentrale Sensorsteuergerät anhand der Zuordnung bestimmte Objektinformation einem zentralen Steuergerät des Kraftfahrzeugs übermittelt. Beispielsweise kann vorgesehen sein, dass die Sensoreinrichtungen mit dem Sensorsteuergerät kommunizieren, welches die Messpunkte in den Sensordaten der Sensoreinrichtungen identifizieren kann und die Messpunkte den Oberflächenbereichen von Objekten zuordnen kann. Außerdem kann die relative Lage der Oberflächenbereiche durch das zumindest eine dezentrale Sensorsteuergerät bestimmt werden, und damit bewertet werden, wie vielen Objekten die Oberflächenbereiche zuzuordnen sind. Das Sensorsteuergerät kann also bestimmen, wie viele Objekte sich in dem Umgebungsbereich des Kraftfahrzeugs befinden. Basierend darauf können Oberflächenbereiche zu Gesamtoberflächenbereichen zusammengelegt werden oder nicht.

Informationen über die Oberflächenbereiche oder die Gesamtoberflächenbereiche, beispielsweise eine räumliche Lage der Oberflächenbereiche oder der Gesamtoberflächenbereiche, können von dem dezentralen Sensorsteuergerät als die Objektinformationen bestimmt werden und dem zentralen Steuergerät des Kraftfahrzeugs übermittelt werden. Dazu können das zumindest eine Sensorsteuergerät und das zentrale Steuergerät drahtlos und/oder drahtgebunden, beispielsweise über einen Bus, kommunizieren. Das zentrale Steuergerät kann beispielsweise dazu ausgelegt sein, anhand der Objektinformationen eine Assistenzfunktion durchzuführen. Eine solche Assistenzfunktion kann beispielsweise das Bereitstellen von kollisionsvermeidenden Maßnahmen und/oder ein zumindest semi-autonomes Manövrieren des Kraftfahrzeugs in dem Umgebungsbereich sein. Um nun zu verhindern, dass zu große Datenmengen in Form von Messpunkten an das zentrale Steuergerät übermittelt werden, welche das zentrale Steuergerät dann erst aufwändig auswerten muss, werden die Messpunkte durch das dezentrale Sensorsteuergerät charakterisiert und auf die Objektinformation reduziert, welche dem zentralen Steuergerät bereitgestellt wird.

In einer Weiterbildung der Erfindung wird anhand der Oberflächenbereiche zumindest eine für das Kraftfahrzeug nicht befahrbare Sperrzone in dem Umgebungsbereich bestimmt. Der Umgebungsbereich wird also in für das Kraftfahrzeug befahrbare und nicht befahrbare Teilbereiche unterteilt. Die Unterteilung kann durch das zentrale Steuergerät anhand der durch das dezentrale Sensorsteuergerät bestimmten Objektinformationen erfolgen. Die Sperrzonen sowie die für das Kraftfahrzeug befahrbaren Zonen bzw. Flächen können in einer dem Umgebungsbereich beschreibenden Umfeldkarte hinterlegt werden. Anhand der Umfeldkarte kann das Kraftfahrzeug durch das zentrale Steuergerät beispielsweise autonom bzw. vollautomatisch und kollisionsfrei in dem Umgebungsbereich manövriert werden.

In einer vorteilhaften Ausführungsform der Erfindung werden, im Falle, dass zusätzlich dritte Messpunkte eines dritten, sich in einem Überlappungsbereich von Erfassungsbereichen der Sensoreinrichtungen befindlichen Oberflächenbereiches empfangen werden, basierend auf den dritten Messpunkten Konfidenzwerte für die Sensoreinrichtungen bestimmt. Gemäß dieser Ausführungsform überlappen sich die Erfassungsbereiche der Sensoreinrichtungen in dem Abstand, in welchem sich die Oberflächenbereiche des Objektes oder der Objekte befinden. In dem Überlappungsbereich können sich die dritten Messpunkte befinden, welche von der ersten und/oder der zumindest einen zweiten Sensoreinrichtung erfasst werden. Anhand der dritten Messpunkte kann einerseits überprüft werden, ob die Zuordnung der Oberflächenbereiche zu einem einzelnen Objekt oder zu separaten Objekten korrekt erfolgt ist. Gleichzeitig kann auch eine Zuverlässigkeit der Sensoreinrichtungen beim Erfassen der Messpunkte bewertet werden. Die Messungen der Sensoreinrichtungen können also plausibilisiert werden. Dazu werden die Konfidenzwerte für die Sensoreinrichtungen bestimmt. Die Konfidenzwerte beschreiben bzw. quantifizieren ein Vertrauen, welches in eine Richtigkeit von Messungen der Sensoreinrichtungen gelegt werden kann. Anders ausgedrückt ist der Konfidenzwert eine Maßeinheit für das Vertrauen in die Richtigkeit der Messungen der Sensoreinrichtungen.

Insbesondere wird im Falle, dass die dritten Messpunkte von den zumindest zwei Sensoreinrichtungen erfasst werden, den Sensoreinrichtungen ein erster Konfidenzwert zugeteilt, und im Falle, dass die dritten Messpunkte nur von einer der Sensoreinrichtungen erfasst werden, wird der jeweils anderen Sensoreinrichtung ein im Vergleich zum ersten Konfidenzwert geringerer zweiter Konfidenzwert zugeteilt. Wenn die anhand der Messpunkte der zumindest zwei Sensoreinrichtungen erfassten Oberflächenbereiche anhand der relativen Lage der Oberflächenbereiche zueinander zusammengelegt werden, so müssten sich in den Sensordaten aus dem Überlappungsbereich der Erfassungsbereiche beider Sensoreinrichtungen dritte Messpunkte befinden. Falls dies der Fall ist, so kann beiden Sensoreinrichtungen der erste Konfidenzwert zugeteilt werden, welcher aussagt, dass beide Sensoreinrichtungen zuverlässig messen. Anders ausgedrückt kann in die Richtigkeit der Messungen beider Sensoreinrichtungen vertraut werden. Falls sich in den Sensordaten aus dem Überlappungsbereich lediglich die dritten Messpunkte einer Sensoreinrichtung befinden, so wird derjenigen Sensoreinrichtung, welche innerhalb des Überlappungsbereiches keine dritten Messpunkte erfasst, der zweite Konfidenzwert zugeteilt. Dieser sagt aus, dass den Messungen dieser Sensoreinrichtung ein geringeres Vertrauen geschenkt werden sollte. Beispielsweise kann die Sensoreinrichtung defekt oder verschmutzt sein und sollte gegebenenfalls überprüft werden. In diesem Fall kann beispielsweise ein Informationssignal an den Fahrer des Kraftfahrzeugs ausgegeben werden.

Dabei kann vorgesehen sein, dass in Abhängigkeit von den Konfidenzwerten der Sensoreinrichtungen Gewichtungsfaktoren für die Messpunkte der Sensoreinrichtungen zum Gewichten der Messpunkte beim Erfassen von Objekten bestimmt werden. Die Konfidenzwerte der zumindest zwei Sensoreinrichtungen werden also durch das Gewichten der Messpunkte der jeweiligen Sensoreinrichtungen auf die durch die Sensoreinrichtungen erfassten Messpunkte sowie die basierend auf den Messpunkten erfassten Oberflächenbereiche von Objekten übertragen. Darüber hinaus kann jedem Oberflächenbereich bzw. jedem Objekt ein von der erfassenden Sensoreinrichtung abhängiger Konfidenzwert zugeteilt werden, welcher beispielsweise ebenfalls in die Umgebungskarte eingetragen werden kann. Der Konfidenzwert des Objektes sagt beispielsweise aus, mit welcher Wahrscheinlichkeit das von den jeweiligen Sensoreinrichtungen erfasste Objekt tatsächlich existiert. Durch das Bestimmen der Konfidenzwerte bzw. der Gewichtungsfaktoren ist das Verfahren besonders zuverlässig gestaltet.

Die Erfindung betrifft außerdem ein Sensorsteuergerät für ein Fahrerassistenzsystem eines Kraftfahrzeugs, welches dazu ausgelegt ist, ein erfindungsgemäßes Verfahren oder eine vorteilhafte Ausführungsform davon durchzuführen. Das Sensorsteuergerät ist insbesondere ein dezentrales Steuergerät im Kraftfahrzeug, welches dazu ausgelegt ist, Sensordaten der zumindest zwei Sensoreinrichtungen zu empfangen, in den Sensordaten die Messpunkte zu identifizieren, anhand der Messpunkte die relative Lage der Oberflächenbereiche zueinander zu bestimmen und die Oberflächenbereiche einem oder mehreren Objekten anhand der relativen Lage zuzuordnen. Die Zuordnung sowie Lageinformationen des oder der Objekte können von dem Sensorsteuergerät bestimmt werden.

Ferner betrifft die Erfindung ein Fahrerassistenzsystem für ein Kraftfahrzeug mit zumindest zwei Sensoreinrichtungen zum Erfassen von Messpunkten von Oberflächenbereichen von Objekten in einem Umgebungsbereich des Kraftfahrzeugs und mit zumindest einem erfindungsgemäßen Sensorsteuergerät. Das Fahrerassistenzsystem kann außerdem ein zentrales Steuergerät aufweisen, welches mit dem zumindest einen Sensorsteuergerät kommunizieren kann. Beispielsweise kann das Sensorsteuergerät dem zentralen Steuergerät Objektinformationen übermitteln, anhand dessen das Sensorsteuergerät eine Assistenzfunktion des Fahrerassistenzsystems ausführen kann.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Sensorsteuergerät, für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs;
- Fig. 2: eine schematische Darstellung von zwei Sensoreinrichtungen und einem Objekt, welches sich nur bereichsweise in Erfassungsbereichen der Sensoreinrichtungen befindet;
- Fig. 3: eine schematische Darstellung der zwei Sensoreinrichtungen gemäß Fig. 2 beim Erfassen des Objektes, welches sich nur bereichsweise in Erfassungsbereichen der Sensoreinrichtungen befindet;
- Fig. 4: eine schematische Darstellung der zwei Sensoreinrichtungen und dem Objekt, welches sich vollständig in den Erfassungsbereichen der Sensoreinrichtungen befindet;
- Fig. 5: eine schematische Darstellung der zwei Sensoreinrichtungen gemäß Fig. 4 beim Erfassen des Objektes, welches sich vollständig in den Erfassungsbereichen der Sensoreinrichtungen befindet;

In den Figuren sind gleiche sowie funktionsgleiche Elemente mit den gleichen Bezugszeichen versehen.

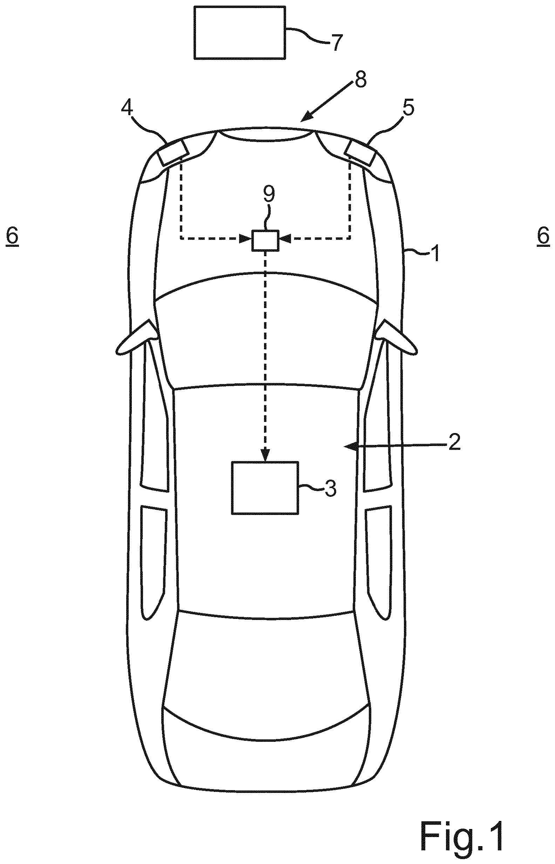

Fig. 1 zeigt ein Kraftfahrzeug 1 gemäß einer Ausführungsform der vorliegenden Erfindung. Das Kraftfahrzeug 1 ist im vorliegenden Fall als ein Personenkraftwagen ausgebildet. Das Kraftfahrzeug 1 weist ein Fahrerassistenzsystem 2 auf, welches dazu ausgelegt ist, einen Fahrer des Kraftfahrzeugs 1 beim Führen des Kraftfahrzeugs 1 zu unterstützen. Beispielsweise kann das Fahrerassistenzsystem 2 das Kraftfahrzeug 1 autonom bzw. vollautomatisch manövrieren. Dazu kann ein zentrales Steuergerät 3 des Kraftfahrzeugs 1 beispielsweise eine Längsführung und eine Querführung des Kraftfahrzeugs 1 übernehmen, das Kraftfahrzeug 1 also automatisch lenken, beschleunigen und abbremsen. Das Fahrerassistenzsystem 2 weist zumindest zwei Sensoreinrichtungen 4, 5 auf, welche dazu ausgelegt sind, einen Umgebungsbereich 6 des Kraftfahrzeugs 1 zu überwachen. Anhand der Sensoreinrichtungen 4, 5 können Objekte 7 in dem Umgebungsbereich 6 erkannt werden. Die Sensoreinrichtungen 4, 5 welche ich hier an einem Frontbereich 8 des Kraftfahrzeugs 1 angeordnet sind, können gleichartige oder verschiedenartige Sensoreinrichtungen sein. Die Sensoreinrichtungen 4, 5 sind insbesondere gleichartige, als Lidar-Sensoren, z.B. als Laserscanner, ausgebildete Sensoreinrichtungen. Außerdem weist das Fahrerassistenzsystem 2 ein dezentrales Sensorsteuergerät 9 auf, welchem Sensordaten der Sensoreinrichtungen 4, 5 zur Auswertung bereitgestellt werden. Das dezentrale Sensorsteuergerät 9 kann mit dem zentralen Steuergerät 3 kommunizieren und beispielsweise Umgebungsinformationen, welche anhand der Sensordaten der Sensoreinrichtungen 4, 5 erfasst wurden, an das zentrale Steuergerät 3 übermitteln.

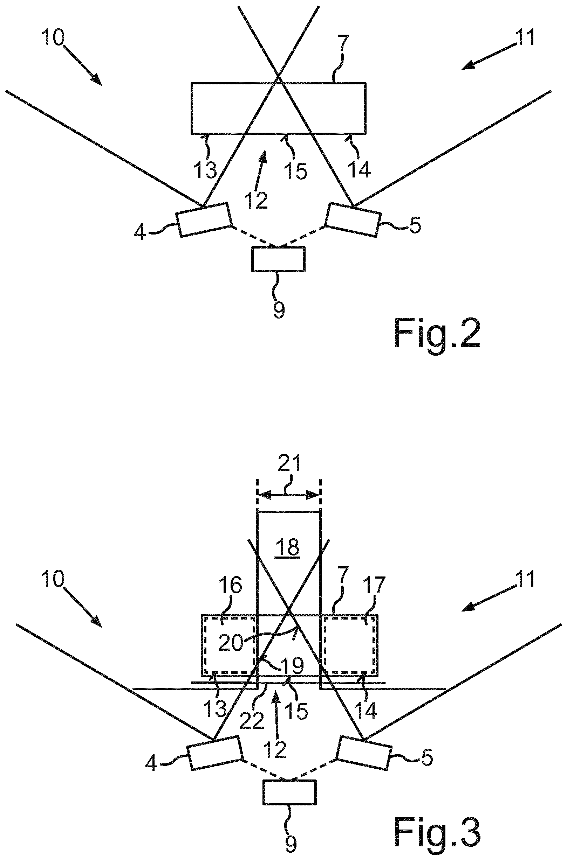

In Fig. 2 und Fig. 3 sind schematisch die Sensoreinrichtungen 4, 5, das dezentrale Sensorsteuergerät 9 sowie das Objekt 7 dargestellt. Außerdem sind Erfassungsbereiche 10, 11 der Sensoreinrichtungen 4, 5 dargestellt. Dabei weist eine erste Sensoreinrichtung 4 einen ersten Erfassungsbereich 10 und eine zweite Sensoreinrichtung 5 einen zweiten Erfassungsbereich 11 auf. Die Erfassungsbereiche 10, 11 überlappen sich dabei im Abstand eines Gesamtoberflächenbereiches 12 des Objektes 7 relativ zu den Sensoreinrichtungen 4, 5 nicht, wobei der Gesamtoberflächenbereich 12 des Objektes 7 hier durch eine den Sensoreinrichtungen 4, 5 zugewandte Frontseite des Objektes 7 gebildet ist. Anders ausgedrückt weisen die Erfassungsbereiche 10, 11 im Abstand des Gesamtoberflächenbereiches 12 des Objektes 7 zu den Sensoreinrichtungen 4, 5 keinen Überlappungsbereich auf. Dies hat zur Folge, dass ein erster Oberflächenbereich 13 des Gesamtoberflächenbereiches 12 des Objektes 7 in dem ersten Erfassungsbereich 10 der ersten Sensoreinrichtung 4 liegt, ein zweiter Oberflächenbereich 14 des Gesamtoberflächenbereiches 12 des Objektes 7 in dem zweiten Erfassungsbereich 11 der zweiten Sensoreinrichtung 5 liegt und ein dritter Oberflächenbereich 15 des Gesamtoberflächenbereiches 12 des Objektes 7 außerhalb der Erfassungsbereiche 10, 11 beider Sensoreinrichtungen 4, 5 liegt. Dennoch gehören alle Oberflächenbereiche 13, 14, 15 zu dem Objekt 7 und bilden den Gesamtoberflächenbereich 12 aus. Erste Sensordaten der ersten Sensoreinrichtung 4 weisen also erste Messpunkte nur an dem ersten Oberflächenbereich 13 und zweite Sensordaten der zweiten Sensoreinrichtung 5 weisen zweite Messpunkte nur an dem zweiten Oberflächenbereich 14 auf. Anhand der ersten und der zweiten Messpunkte der Sensoreinrichtungen 4, 5 können die Oberflächenbereiche 13, 14 erkannt werden. Anhand der ersten und zweiten Messpunkte können beispielsweise Konturlinien bestimmt werden, welche die Oberflächenbereiche 13, 14 repräsentieren.

In Fig. 3 ist gezeigt, dass die Oberflächenbereiche 13, 14 als zwei separate Objekte 16, 17 identifiziert werden können, da aus einem Bereich 18 zwischen inneren Begrenzungen 19, 20 der Erfassungsbereiche 10, 11, in welchem sich der dritte Oberflächenbereich befindet, keine Sensordaten der Sensoreinrichtung 4, 5 vorliegen. Um nun zu verhindern, dass der dritte Oberflächenbereich 15 ignoriert wird und der Bereich 18 fälschlicherweise als ein für das Kraftfahrzeug 1 befahrbarer Bereich bzw. Korridor bewertet wird, wird die relative Lage der Oberflächenbereiche 13, 14 zueinander bestimmt. Insbesondere wird ein Abstand 21 von zueinander direkt benachbarten ersten und zweiten Messpunkten in den Sensordaten der Sensoreinrichtungen 4, 5 bestimmt. Die zueinander benachbarten ersten und zweiten Messpunkte sind dabei insbesondere der auf der inneren Begrenzung 19 des ersten Erfassungsbereiches 10 liegende erste Messpunkt sowie der auf der inneren Begrenzung 20 des zweiten Erfassungsbereiches 11 liegende zweite Messpunkt.

Wenn dieser Abstand 21 einen vorbestimmten Schwellwert unterschreitet und/oder wenn der Wert des Abstands 21 über zumindest zwei Messungen im Wesentlichen konstant bleibt, so kann davon ausgegangen werden, dass die Oberflächenbereiche 13, 14 Teilbereiche des Gesamtoberflächenbereiches 12 sind. Die als separat bestimmten Objekte 16, 17 sind also Teilobjektbereiche des Objektes 7. Daher werden die Oberflächenbereiche 13, 14 zu dem Gesamtoberflächenbereich 12 kombiniert. Dazu können die die Oberflächenbereiche 13, 14 repräsentierenden Konturlinien beispielsweise zu einer Gesamtkonturlinie 22 verbunden werden. Der dritte Oberflächenbereich 15 wird also künstlich erzeugt. Anhand der Sensordaten der beiden Sensoreinrichtungen 4, 5, beispielsweise anhand der Konturlinie 22, können außerdem die Lage, also der Abstand sowie die Orientierung des Gesamtoberflächenbereiches 12, und damit die Lage des Objektes 7 zu dem Kraftfahrzeug 1 bestimmt werden. Der Gesamtoberflächenbereich 12 sowie dessen Lage können beispielsweise von dem Sensorsteuergerät 9 bestimmt werden, welches die Lage des Gesamtoberflächenbereiches 12 als Objektinformation an das zentrale Steuergerät 3 übermitteln kann. Das zentrale Steuergerät 3 kann anhand des Gesamtoberflächenbereiches 12 eine Sperrzone bestimmen, welche von dem Kraftfahrzeug 1 nicht befahren werden darf. Die Sperrzone erstreckt sich dabei über eine Gesamtlänge des Gesamtoberflächenbereiches 12. Diese Sperrzone kann beispielsweise in einer den Umgebungsbereich 6 beschreibenden Umfeldkarte hinterlegt werden, basierend auf welcher das zentrale Steuergerät 3 das Kraftfahrzeug 1 beispielsweise manövrieren kann.

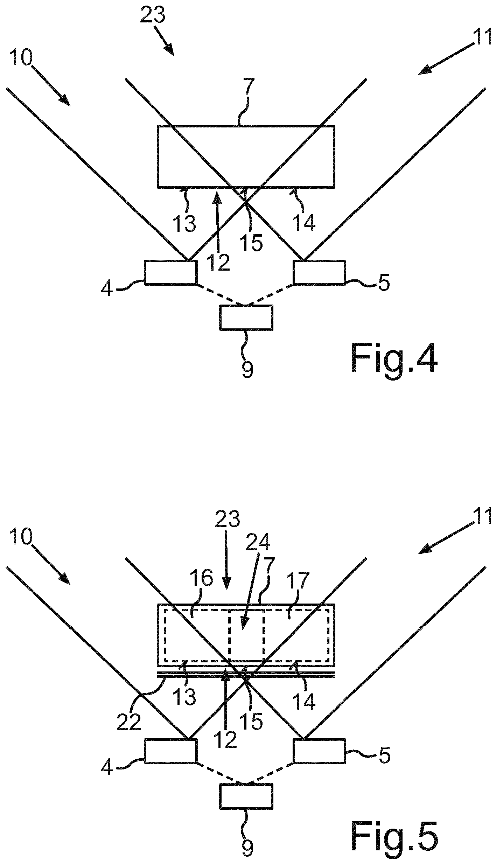

In Fig. 4 und Fig. 5 ist gezeigt, dass sich die Erfassungsbereiche 10, 11 der Sensoreinrichtungen 4, 5 im Abstand des Objektes 7 überlappen und dabei einen Überlappungsbereich 23 ausbilden. Somit befindet sich der dritte Oberflächenbereich 15 des Objektes 7 in dem Überlappungsbereich 23 und damit in den Erfassungsbereichen 10, 11 beider Sensoreinrichtungen 4, 5. In den Sensordaten beider Sensoreinrichtungen 4, 5 können sich dabei dritte Messpunkte befinden, welche zu dem dritten Oberflächenbereich 15 korrespondieren. In Fig. 5 ist gezeigt, dass sich die separaten Objekte 16, 17, welche anhand der Sensordaten der ersten und zweiten Sensoreinrichtung 4, 5 erfasst wurden, in einem Objektbereich 24 überlappen, sodass der Gesamtoberflächenbereich 12 durch Kombinieren der Oberflächenbereiche 13, 14, 15 bestimmt werden kann. Der dritte Oberflächenbereich 15 muss hier also nicht künstlich erzeugt werden, sondern kann direkt erfasst werden. Anhand des Gesamtoberflächenbereiches 12 kann dann wiederum die Gesamtkonturlinie 22 bestimmt werden.

Darüber hinaus können die dritten Messpunkte dazu verwendet werden, eine Zuverlässigkeit der Sensoreinrichtungen 4, 5 beim Messen zu bewerten. Wenn eine der Sensoreinrichtungen 4, 5, beispielsweise die erste Sensoreinrichtung 4, keine dritten Messpunkte in dem Überlappungsbereich 23 erfasst, während hingegen die zweite Sensoreinrichtung 5 dritte Messpunkte in dem Überlappungsbereich 23 erfasst, so kann den Messungen der ersten Sensoreinrichtung 4 ein geringes Vertrauen entgegengebracht werden als den Messungen der zweiten Sensoreinrichtung 5. Das Vertrauen kann beispielsweise anhand eines Konfidenzwertes bemaßt werden, welcher den Messungen der Sensoreinrichtungen 4, 5 zugeteilt wird. Dabei wird den Messungen der zweiten Sensoreinrichtung 5 ein hohes Vertrauen entgegengebracht und den Messungen der ersten Sensoreinrichtung 4 ein niedrigeres Vertrauen entgegengebracht. Dieses Vertrauen kann bemaßt bzw. quantifiziert werden, indem der zweiten Sensoreinrichtung 5 ein im Vergleich zur ersten Sensoreinrichtung 4 höherer Konfidenzwert zugeteilt wird. Die Konfidenzwerte der Sensoreinrichtungen 4, 5 können außerdem an die anhand der Sensoreinrichtungen 4, 5 erfassten Objekte 7 weitergegeben werden, sodass durch die Konfidenzwerte der Objekte 7 ausgedrückt wird, wie wahrscheinlich sich ein Objekt 7 an der von der jeweiligen Sensoreinrichtung 4, 5 erfassten Position in dem Umgebungsbereich 6 befindet.

## Patentansprüche

1. Verfahren zum Überwachen eines Umgebungsbereiches (6) eines Kraftfahrzeugs (1), wobei durch zumindest zwei Sensoreinrichtungen (4, 5) des Kraftfahrzeugs (1) erfasste Messpunkte von Oberflächen von Objekten (7) in dem Umgebungsbereich (6) empfangen werden,
**dadurch gekennzeichnet, dass**
durch eine erste Sensoreinrichtung (4) erfasste erste Messpunkte eines ersten Oberflächenbereiches (13) empfangen werden und durch eine zweite Sensoreinrichtung (5) erfasste zweite Messpunkte eines mit dem ersten Oberflächenbereich (13) überlappungsfreien zweiten Oberflächenbereiches (14) empfangen werden, die ersten und zweiten Messpunkte in sich nicht überlappenden Bereichen der Erfassungsbereiche der ersten und zweiten Senoreinrichtung liegen, anhand der ersten und zweiten Messpunkte eine relative Lage der Oberflächenbereiche (13, 14) zueinander bestimmt wird, anhand der relativen Lage bestimmt wird, ob die Oberflächenbereiche (13, 14) einem einzelnen Objekt (7) zuzuordnen sind, und falls ja, die Oberflächenbereiche (13, 14) zu einem Gesamtoberflächenbereich (12) des Objektes (7) zusammengelegt werden.

2. Verfahren nach Anspruch 1,
**dadurch gekennzeichnet, dass**
als die relative Lage der Oberflächenbereiche (13, 14) zueinander ein Abstand (21) von zwei direkt benachbarten ersten und zweiten Messpunkten bestimmt wird und anhand des Abstands (21) bestimmt wird, ob die Oberflächenbereiche (13, 14) einem einzelnen Objekt (7) zuzuordnen sind.

3. Verfahren nach Anspruch 2,
**dadurch gekennzeichnet, dass**
anhand der ersten Messpunkte eine erste Konturlinie bestimmt wird, anhand der zweiten Messpunkte eine zweite Konturlinie bestimmt wird und die erste Konturlinie und die zweite Konturlinie in Abhängigkeit von dem Abstand (21) der beiden benachbarten ersten und zweiten Messpunkte, welche einander zugewandten Endpunkten der Konturlinien entsprechen, zu einer den Gesamtoberflächenbereich (12) repräsentierenden Gesamtkonturlinie (22) verbunden werden.

4. Verfahren nach Anspruch 2 oder 3,
**dadurch gekennzeichnet, dass**
der erste und der zweite Oberflächenbereich (13, 14) einem einzelnen Objekt (7) zugeordnet werden und zu dem Gesamtoberflächenbereich (12) zusammengelegt werden, falls der Abstand (21) einen vorbestimmten Schwellwert unterschreitet.

5. Verfahren nach einem der Ansprüche 2 bis 4,
**dadurch gekennzeichnet, dass**
der erste und der zweite Oberflächenbereich (13, 14) einem einzelnen Objekt (7) zugeordnet werden und zu dem Gesamtoberflächenbereich (12) zusammengelegt werden, falls Werte des Abstands (21) in zumindest zwei Messungen der Sensoreinrichtungen (4, 5) höchstens um einen vorbestimmten Grenzwert voneinander abweichen.

6. Verfahren nach einem der vorhergehenden Ansprüche,
**dadurch gekennzeichnet, dass**
die Zuordnung der Oberflächenbereiche (13, 14) von zumindest einem dezentralen Sensorsteuergerät (9) des Kraftfahrzeugs (1) durchgeführt wird, und zumindest eine durch das zumindest eine dezentrale Sensorsteuergerät (9) anhand der Zuordnung bestimmte Objektinformation einem zentralen Steuergerät (3) des Kraftfahrzeugs (1) übermittelt wird.

7. Verfahren nach einem der vorhergehenden Ansprüche,
**dadurch gekennzeichnet, dass**
anhand der Oberflächenbereiche (13, 14, 12) zumindest eine für das Kraftfahrzeug (1) nicht befahrbare Sperrzone in dem Umgebungsbereich (6) bestimmt wird.

8. Verfahren nach einem der vorhergehenden Ansprüche,
**dadurch gekennzeichnet, dass**
im Falle, dass zusätzlich dritte Messpunkte eines dritten, sich in einem Überlappungsbereich (23) von Erfassungsbereichen (10, 11) der Sensoreinrichtungen (4, 5) befindlichen Oberflächenbereiches (15) empfangen werden, basierend auf den dritten Messpunkten Konfidenzwerte für die Sensoreinrichtungen (4, 5) bestimmt werden.

9. Verfahren nach Anspruch 8,
**dadurch gekennzeichnet, dass**
im Falle, dass die dritten Messpunkte von den zumindest zwei Sensoreinrichtungen (4, 5) erfasst werden, den Sensoreinrichtungen (4, 5) ein erster Konfidenzwert zugeteilt wird, und im Falle, dass die dritten Messpunkte nur von einer der Sensoreinrichtungen (4, 5) erfasst werden, der jeweils anderen Sensoreinrichtung (4, 5) ein im Vergleich zum ersten Konfidenzwert geringerer zweiter Konfidenzwert zugeteilt wird.

10. Verfahren nach Anspruch 8 oder 9,
**dadurch gekennzeichnet, dass**
in Abhängigkeit von den Konfidenzwerten Gewichtungsfaktoren für die Messpunkte der Sensoreinrichtungen (4, 5) zum Gewichten der Messpunkte beim Erfassen von Objekten (7) bestimmt werden.

11. Verfahren nach einem der vorhergehenden Ansprüche,
**dadurch gekennzeichnet, dass**
die Messpunkte in empfangenen Sensordaten zumindest eines Lidar-Sensors und/oder zumindest einer Kamera und/oder zumindest eines Radarsensors und/oder zumindest eines Ultraschallsensors der Sensoreinrichtungen (4, 5) erfasst werden.

12. Sensorsteuergerät (9) für ein Fahrerassistenzsystem (2) eines Kraftfahrzeugs (2), welches dazu ausgelegt ist, ein Verfahren nach einem der vorhergehenden Ansprüche durchzuführen.

13. Fahrerassistenzsystem (2) für ein Kraftfahrzeug (1) mit zumindest zwei Sensoreinrichtungen (4, 5) zum Erfassen von Messpunkten von Oberflächenbereichen von Objekten (7) in einem Umgebungsbereich (6) des Kraftfahrzeugs (1) und mit zumindest einem Sensorsteuergerät (9) nach Anspruch 12.

14. Kraftfahrzeug (1) mit einem Fahrerassistenzsystem (2) nach Anspruch 13.

## Claims

1. Method for monitoring a surrounding area (6) of a motor vehicle (1), wherein measurement points of surfaces of objects (7) in the surrounding area (6) that are detected by at least two sensor devices (4, 5) of the motor vehicle (1) are received,
**characterized in that**
first measurement points of a first surface area (13) detected by a first sensor device (4) are received and second measurement points, which are detected by a second sensor device (5), of a second surface area (14) that is free of overlaps with the first surface area (13) are received, the first and second measurement points lie in non-overlapping areas of the detection areas of the first and second sensor devices, a relative position of the surface areas (13, 14) with respect to each other is determined based on the first and second measurement points, and it is determined based on the relative position whether the surface areas (13, 14) are to be assigned to an individual object (7) and, if so, the surface areas (13, 14) are combined into a total surface area (12) of the object (7) .

2. Method according to Claim 1,
**characterized in that**
a distance (21) of two directly adjacent first and second measurement points is determined as the relative position of the surface areas (13, 14) with respect to each other and it is determined based on the distance (21) whether the surface areas (13, 14) are to be assigned to an individual object (7) .

3. Method according to Claim 2,
**characterized in that**
a first contour line is determined based on the first measurement points, a second contour line is determined based on the second measurement points, and depending on the distance (21) of the two adjacent first and second measurement points, which correspond to mutually facing end points of the contour lines, the first contour line and the second contour line are combined into a total contour line (22) representing the total surface area (12) .

4. Method according to Claim 2 or 3,
**characterized in that**
the first and the second surface area (13, 14) are assigned to an individual object (7) and are combined into the total surface area (12) if the distance (21) falls below a predetermined threshold value.

5. Method according to any one of Claims 2 to 4,
**characterized in that**
the first and the second surface area (13, 14) are assigned to an individual object (7) and are combined into the total surface area (12) if values of the distance (21) in at least two measurements of the sensor devices (4, 5) differ by no more than a predetermined limit value.

6. Method according to any one of the preceding claims,
**characterized in that**
the assignment of the surface areas (13, 14) is carried out by at least one decentralized sensor control unit (9) of the motor vehicle (1), and at least one item of object information determined by the at least one decentralized sensor control unit (9) based on the assignment is transmitted to a central control unit (3) of the motor vehicle (1).

7. Method according to any one of the preceding claims,
**characterized in that**
based on the surface areas (13, 14, 12) at least one exclusion zone in the surrounding area (6) that is not navigable by the motor vehicle (1) is determined.

8. Method according to any one of the preceding claims,
**characterized in that**
in the case in which in addition third measurement points of a third surface area (15) located in an overlap area (23) of detection areas (10, 11) of the sensor devices (4, 5) are received, confidence values for the sensor devices (4, 5) are determined based on the third measurement points.

9. Method according to Claim 8,
**characterized in that**
in the case in which the third measurement points are detected by the at least two sensor devices (4, 5), the sensor devices (4, 5) are assigned a first confidence value, and in the case in which the third measurement points are detected only by one of the sensor devices (4, 5), the respective other sensor device (4, 5) is assigned a second confidence value lower than the first confidence value.

10. Method according to Claim 8 or 9,
**characterized in that**
depending on the confidence values, weighting factors for the measurement points of the sensor devices (4, 5) are determined for the weighting of the measurement points when detecting objects (7).

11. Method according to any one of the preceding claims,
**characterized in that**
the measurement points are detected in received sensor data of at least one lidar sensor and/or at least one camera and/or at least one radar sensor and/or at least one ultrasonic sensor of the sensor devices (4, 5).

12. Sensor control unit (9) for a driver assistance system (2) of a motor vehicle (2), designed to perform a method according to any one of the preceding claims.

13. Driver assistance system (2) for a motor vehicle (1) with at least two sensor devices (4, 5) for detecting measurement points of surface areas of objects (7) in a surrounding area (6) of the motor vehicle (1) and with at least one sensor control unit (9) according to Claim 12.

14. Motor vehicle (1) with a driver assistance system (2) according to Claim 13.

## Revendications

1. Procédé permettant de surveiller une zone environnante (6) d'un véhicule automobile (1), dans lequel des points de mesure de surfaces d'objets (7) dans la zone environnante (6), détectés par au moins deux dispositifs capteurs (4, 5) du véhicule automobile (1), sont reçus,
**caractérisé en ce que** des premiers points de mesure d'une première zone de surface (13), détectés par un premier dispositif capteur (4), sont reçus, et des deuxièmes points de mesure d'une deuxième zone de surface (14) sans chevauchement avec la première zone de surface (13), détectés par un deuxième dispositif capteur (5), sont reçus, les premiers et deuxièmes points de mesure se trouvent dans des zones sans chevauchement des zones de détection du premier et du deuxième dispositif capteur, une position relative des zones de surface (13, 14) l'une par rapport à l'autre étant déterminée à l'aide des premiers et deuxièmes points de mesure, à l'aide de la position relative, il est déterminé si les zones de surface (13, 14) sont à associer à un seul objet (7), et si oui, les zones de surface (13, 14) sont fusionnées en une zone de surface totale (12) de l'objet (7).

2. Procédé selon la revendication 1, **caractérisé en ce qu'**une distance (21) de deux premier et deuxième points de mesure directement adjacents est déterminée en tant que position relative des zones de surface (13, 14) l'une par rapport à l'autre, et il est déterminé à l'aide de la distance (21) si les zones de surface (13, 14) sont à associer à un seul objet (7).

3. Procédé selon la revendication 2, **caractérisé en ce qu'**une première ligne de contour est déterminée à l'aide des premiers points de mesure, une deuxième ligne de contour est déterminée à l'aide des deuxièmes points de mesure, et la première ligne de contour et la deuxième ligne de contour sont reliées en une ligne de contour totale (22) représentant la zone de surface totale (12), en fonction de la distance (21) des deux premier et deuxième points de mesure adjacents qui correspondent à des points d'extrémité, tournés les uns vers les autres, des lignes de contour.

4. Procédé selon la revendication 2 ou 3, **caractérisé en ce que** la première et la deuxième zone de surface (13, 14) sont associées à un seul objet (7), et sont fusionnées en zone de surface totale (12) si la distance (21) soupasse une valeur seuil prédéterminée.

5. Procédé selon l'une quelconque des revendications 2 à 4, **caractérisé en ce que** la première et la deuxième zone de surface (13, 14) sont associées à un seul objet (7), et sont fusionnées en zone de surface totale (12) si les valeurs de la distance (21) dans au moins deux mesures des dispositifs capteurs (4, 5) dévient l'une de l'autre au maximum d'une valeur limite prédéterminée.

6. Procédé selon l'une quelconque des revendications précédentes, **caractérisé en ce que** l'association des zones de surface (13, 14) est effectuée par au moins un appareil de commande de capteur (9) décentralisé du véhicule automobile (1), et au moins une information d'objet, déterminée par ledit au moins un appareil de commande de capteur décentralisé (9) à l'aide de l'association, est transmise à un appareil de commande central (3) du véhicule automobile (1).

7. Procédé selon l'une quelconque des revendications précédentes, **caractérisé en ce qu'**à l'aide des zones de surface (13, 14, 12), au moins une zone interdite non accessible au véhicule automobile (1) est déterminée dans la zone environnante (6).

8. Procédé selon l'une quelconque des revendications précédentes, **caractérisé en ce qu'**au cas où des troisièmes points de mesure d'une troisième zone de surface (15) se trouvant dans une zone de chevauchement (23) des zones de détection (10, 11) des dispositifs capteurs (4, 5) sont reçus en plus, des valeurs de confiance sont déterminées pour les dispositifs capteurs (4, 5) sur la base des troisièmes points de mesure.

9. Procédé selon la revendication 8, **caractérisé en ce qu'**au cas où les troisièmes points de mesure sont détectés par les au moins deux dispositifs capteurs (4, 5), une première valeur de confiance est attribuée aux dispositifs capteurs (4, 5), et au cas où les troisièmes points de mesure ne sont détectés que par l'un des dispositifs capteurs (4, 5), une deuxième valeur de confiance inférieure en comparaison avec la première valeur de confiance est attribuée à l'autre dispositif capteur (4, 5) respectivement.

10. Procédé selon la revendication 8 ou 9, **caractérisé en ce qu'**en fonction des valeurs de confiance, des facteurs de pondération pour les points de mesure des dispositifs capteurs (4, 5) sont déterminés pour pondérer les points de mesure lors de la détection d'objets (7).

11. Procédé selon l'une quelconque des revendications précédentes, **caractérisé en ce que** les points de mesure dans des données de capteur reçues d'au moins un capteur lidar et/ou d'au moins une caméra et/ou d'au moins un capteur radar et/ou d'au moins un capteur à ultrasons des dispositifs capteurs (4, 5) sont détectés.

12. Appareil de commande de capteur (9) pour un système d'assistance au conducteur (2) d'un véhicule automobile (2), qui est conçu pour effectuer un procédé selon l'une quelconque des revendications précédentes.

13. Système d'assistance au conducteur (2) pour un véhicule automobile (1) comprenant au moins deux dispositifs capteurs (4, 5) pour détecter des points de mesure de zones de surface d'objets (7) dans une zone environnante (6) du véhicule automobile (1), et comprenant au moins un appareil de commande de capteur (9) selon la revendication 12.

14. Véhicule automobile (1) comprenant un système d'assistance au conducteur (2) selon la revendication 13.
